# EUROPEAN PATENT APPLICATION

(11) **EP 3 156 887 A1**
(43) Date of publication of application: **19.04.2017**
(21) Application number: 15834462.2
(22) Date of filing: 11.06.2015
(51) Int. Cl.: G06F 3/041, G06F 3/044

(54) **ELECTROSTATIC CAPACITANCE TOUCH PANEL**

(30) Priority: 22.08.2014 JP 2014169134
(71) Applicant: Japan Aviation Electronics Industry, Limited, Tokyo 150-0043 (JP)
(72) Inventor: TAKIGUCHI, Tsuyoshi, Tokyo 150-0043 (JP); IWAO, Naoki, Tokyo 150-0043 (JP); SATO, Mitsunori, Tokyo 150-0043 (JP); TAKEZAWA, Yutaka, Tokyo 150-0043 (JP); SAKAUE, Akitoshi, Tokyo 150-0043 (JP)
(74) Representative: MERH-IP Matias Erny Reichl Hoffmann Patentanwälte PartG mbB
(86) International application number: PCT/JP2015/066823
(87) International publication number: WO 2016/027555

(57) **Abstract**

A capacitive touch panel includes a first sensor pattern that includes first electrode lines arranged in parallel, each first electrode line including first sensor electrodes arranged in a first direction and first connection electrodes that connect first sensor electrodes; a second sensor pattern that includes second electrode lines arranged in parallel, each second electrode line including second sensor electrodes arranged in a second direction that crosses the first direction and second connection electrodes that connect second sensor electrodes, the second sensor pattern forming a matrix together with the first sensor pattern; first signal wires drawn out in the second direction from the first electrode lines, the first signal wires being wired to have an overlap with the first sensor electrodes with an insulation layer placed therebetween, except for connection parts to the first sensor electrodes; and second signal wires drawn out in the second direction from the individual second electrode lines. The area other than the sensor area can be reduced, and the device size can be reduced.

## Description

### TECHNICAL FIELD

The present invention relates to a projected capacitive touch panel.

### BACKGROUND ART

Figs. 1A and 1B show a configuration included in Patent literature 1 as a conventional example of this type of capacitive touch panel, in which first electrodes 12, second electrodes 13, first connection parts 14, second connection parts 15, insulation sheets 16, and lead wires 17 are formed on or above a transparent base material 11.

The first electrodes 12 are arranged linearly in an X direction, they are coupled by first connection parts 14 to form a first electrode line, and first electrode lines are arranged in parallel above the transparent base material 11. The second electrodes 13 are arranged linearly in a Y direction orthogonal to the X direction, they are coupled by second connection parts 15 to form a second electrode line, and second electrode lines are arranged in parallel on or above the transparent base material 11.

The first and second electrode lines are disposed to cross each other such that the first connection parts 14 have an overlap with the second connection parts 15, causing a lattice of the first electrodes 12 and the second electrodes 13 to be formed above the transparent base material 11. The insulation sheets 16 are placed between the first connection parts 14 and the second connection parts 15.

The lead wires 17 are independently connected to the first and second electrode lines and are formed above the transparent base material 11. A control circuit which is not shown in the figures is connected to the first electrodes 12 and the second electrodes 13 by the lead wires 17.

The capacitive touch panel having the configuration described above is manufactured by forming, over the transparent base material 11, the second connection parts 15 and the insulation sheets 16, and then forming the first electrodes 12, the second electrodes 13, the first connection parts 14, and the lead wires 17 simultaneously. The first electrodes 12 and the second electrodes 13 are electrodes each having a mesh structure formed by a fine-line pattern.

### PRIOR ART LITERATURE

### Patent literature

Patent literature 1: Japanese Patent Application Laid Open No. 2014-85771

### SUMMARY OF THE INVENTION

### PROBLEMS TO BE SOLVED BY THE INVENTION

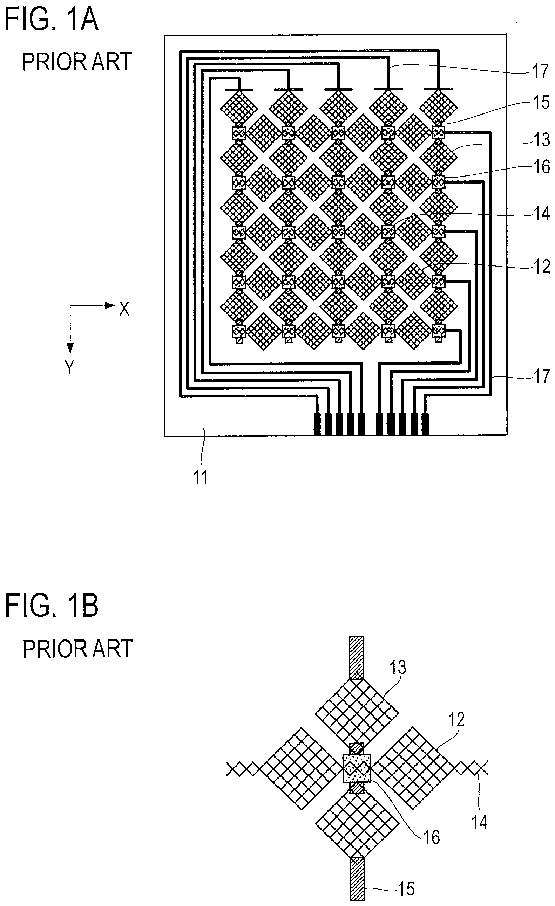

Since the conventional projected capacitive touch panel having the configuration shown in Figs. 1A and 1B has the lead wires 17 (signal wires) for connecting to an external circuit which are laid outside a sensor area, where the lattice of the first electrodes 12 and the second electrode 13 is placed, such that the lead wires 17 surround the sensor area, quite a wide area (wire area) is required in addition to the sensor area. The need for such a wire area prevents size reduction.

An object of the present invention is to provide a capacitive touch panel that allows the size of the area other than the sensor area to be greatly reduced, thus allowing the device to be made smaller than ever before.

### MEANS TO SOLVE THE PROBLEMS

According to the present invention, a capacitive touch panel includes a first sensor pattern that includes a plurality of first electrode lines arranged in parallel, each first electrode line including a plurality of first sensor electrodes arranged in a first direction and a plurality of first connection electrodes that connect adjacent first sensor electrodes; a second sensor pattern that includes a plurality of second electrode lines arranged in parallel, each second electrode line including a plurality of second sensor electrodes arranged in a second direction that crosses the first direction and a plurality of second connection electrodes that connect adjacent second sensor electrodes, the second sensor pattern being insulated from the first sensor pattern and forming a matrix together with the first sensor pattern; first signal wires drawn out in the second direction from the first electrode lines, respectively; and second signal wires drawn out in the second direction from the second electrode lines, respectively. The first signal wires are laid overlappingly with the first sensor electrodes with an insulation layer placed therebetween, except for connection parts to the first sensor electrodes.

### EFFECTS OF THE INVENTION

According to the present invention, the area (wire area) other than the sensor area where the first sensor pattern and the second sensor pattern are placed to form a matrix can be reduced in size more greatly than ever before. Consequently the frame of the capacitive touch panel can be narrowed, and the device size can be reduced correspondingly.

### BRIEF DESCRIPTION OF THE DRAWINGS

Fig. 1A is a plan showing an example of a conventional capacitive touch panel; Fig. 1B is a partial enlarged view of Fig. 1A;
Fig. 2A is a plan showing, in outline, the configuration of a capacitive touch panel according to a first embodiment of the present invention; Fig. 2B is a partial enlarged sectional view of Fig. 2A;
Fig. 3A is a plan showing the shape of a sensor layer of the capacitive touch panel shown in Fig. 2A; Fig. 3B is a plan showing the shape of an insulation layer of the capacitive touch panel shown in Fig. 2A; Fig. 3C is a plan showing the shape of a jumper layer of the capacitive touch panel shown in Fig. 2A;
Fig. 4A is a sectional view schematically showing the layer configuration of the capacitive touch panel shown in Fig. 2A; Fig. 4B is a sectional view schematically showing a different form of layer configuration of the capacitive touch panel;
Fig. 5 is a plan showing an example obtained by changing the outer shape of the capacitive touch panel shown in Fig. 2A;
Fig. 6 is a plan showing, in outline, the configuration of a capacitive touch panel according to a second embodiment of the present invention;
Fig. 7A is a plan showing the shape of a lower sensor layer of the capacitive touch panel shown in Fig. 6; Fig. 7B is a plan showing the shape of an insulation layer of the capacitive touch panel shown in Fig. 6; Fig. 7C is a plan showing the shape of an upper sensor layer of the capacitive touch panel shown in Fig. 6;
Fig. 8 is a plan showing, in outline, the configuration of a capacitive touch panel according to a third embodiment of the present invention; and
Fig. 9 is a plan view showing, in outline, the configuration of a capacitive touch panel according to a fourth embodiment of the present invention.

### DETAILED DESCRIPTION OF THE EMBODIMENTS

Embodiments of the present invention will be described.

Components are made from transparent materials (except for some parts), and the outline of a lower layer could be seen in parts where layers are laid on one another in the plans showing the multilayer configurations, among the figures referenced below; however, the outline that could be seen actually is hidden where appropriate, in order to clearly show the vertical relationship among the layers.

### First Embodiment

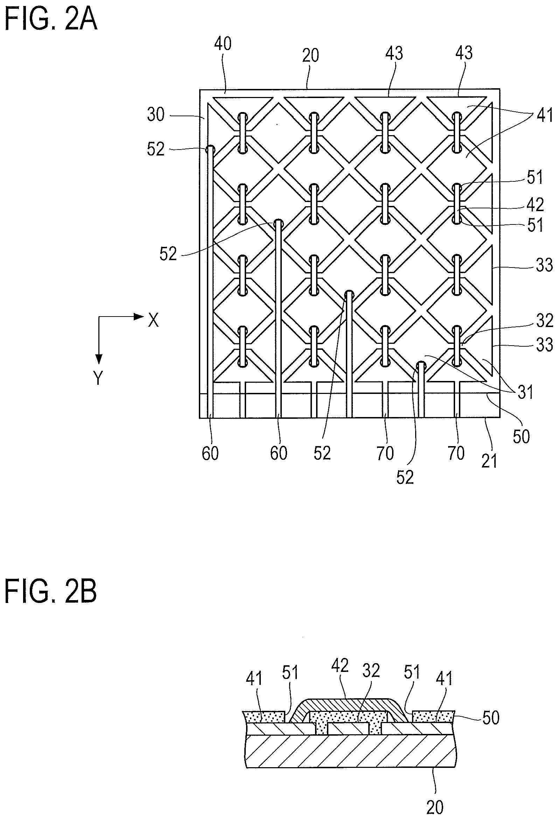

Fig. 2A shows, in outline, the configuration of a projected capacitive touch panel according to a first embodiment of the present invention, in which a first sensor pattern 30, a second sensor pattern 40, an insulation layer 50, first signal wires 60, and second signal wires 70 are formed on or above a base material 20.

The first sensor pattern 30 includes first electrode lines 33 placed in parallel, each electrode line including first sensor electrodes 31 arranged in a first direction (X direction in this embodiment) and first connection electrodes 32 which connect adjacent first sensor electrodes 31 together.
The first sensor electrodes 31, except for the ones placed at both ends of the first electrode lines 33 in this embodiment, have a square shape, and the first sensor electrodes 31 placed at both ends of the first electrode lines 33 have a triangular shape which is a half of the square shape. The first sensor electrodes 31 are arranged such that they are connected to each other at the corners thereof by the first connection electrodes 32.

The second sensor pattern 40 includes second electrode lines 43 placed in parallel, each electrode line including second sensor electrodes 41 arranged in a second direction (Y direction orthogonal to the X direction in this embodiment) which crosses the first direction and second connection electrodes 42 which connect adjacent second sensor electrodes 41 together. Like the first sensor electrodes 31, the second sensor electrodes 41 placed at both ends of the second electrode lines 43 have a triangular shape, and the ones not placed at both ends have a square shape, and they are connected to each other at the corners thereof by the second connection electrodes 42.

The first sensor pattern 30 and the second sensor pattern 40 are placed such that the first connection electrodes 32 cross each other to have an overlap with the second connection electrodes 42, and consequently the first sensor pattern 30 and the second sensor pattern 40 form a matrix. The first sensor electrodes 31 and the second sensor electrodes 41 have a uniform gap between their sides that face each other in parallel.

The first sensor electrodes 31, the second sensor electrodes 41, and the first connection electrodes 32 are formed in the same layer in this embodiment, and the second connection electrodes 42, which cross the first connection electrodes 32, are formed in a different layer. Therefore, the first sensor pattern 30 and the second sensor pattern 40 are insulated from each other.

Fig. 2B shows the structure of a part where the first connection electrode 32 and the second connection electrode 42 cross each other. The insulation layer 50 placed between them causes the first connection electrode 32 and the second connection electrode 42 to be separated and insulated from each other. Both ends of the second connection electrode 42 are connected and conducted to the second sensor electrodes 41 to be connected, through holes 51 disposed in the insulation layer 50.

The first sensor pattern 30 and the second sensor pattern 40 are connected to an external circuit (not shown in the figures) via the first signal wires 60 and the second signal wires 70, respectively. The second signal wires 70 are drawn out from one end of the second electrode lines 43 and are laid in the Y direction, and tips are placed side by side on one side 21 of the base material 20. The second signal wires 70 are formed in the same layer as the second sensor electrodes 41.

Like the second signal wires 70, the first signal wires 60 are drawn out from the first electrode lines 33 and are laid in the Y direction, and tips are placed side by side on the side 21 of the base material 20, like the tips of the second signal wires 70. As shown in Fig. 2A, the first signal wires 60 are laid above the first sensor electrodes 31 with the insulation layer 50 placed between them to separate the first sensor electrodes 31, except for the connection parts to the first sensor electrodes 31.

The inner end (connection part to the first sensor electrode 31) of each first signal wire 60 is connected and conducted, through a hole 52 disposed in the insulation layer 50, to a corresponding first sensor electrode 31. In this embodiment, four first electrode lines 33 and four holes 52 are formed: In the figure, the hole 52 for the first one of the first electrode lines 33 is formed on the leftmost one of the first sensor electrodes 31; the hole 52 for the second one of the first electrode lines 33 is formed on the second one from the left of the first sensor electrodes 31; the hole 52 for the third one of the first electrode lines 33 is formed on the third one from the left of the first sensor electrodes 31; and the hole 52 for the fourth one of the first electrode lines 33 is formed on the fourth one from the left of the first sensor electrodes 31. By forming these holes 52 and wiring the first signal wires 60 above the first sensor electrodes 31, the first signal wires 60 and the second signal wires 70 are arranged alternately in parallel in the Y direction as shown in Fig. 2A, and the pitches among them can be made uniform.

The first signal wires 60 and the second connection electrodes 42 are formed in the same layer. In this embodiment, the following three layers are formed on or above the base material 20 to configure the components described above.
(1) Sensor layer 100 ···
   first and second sensor electrodes 31, 41
   first connection electrodes 32, and second signal wires 70
(2) Insulation layer 50
(3) Jumper layer 200 ···
   second connection electrodes 42 and first signal wires 60

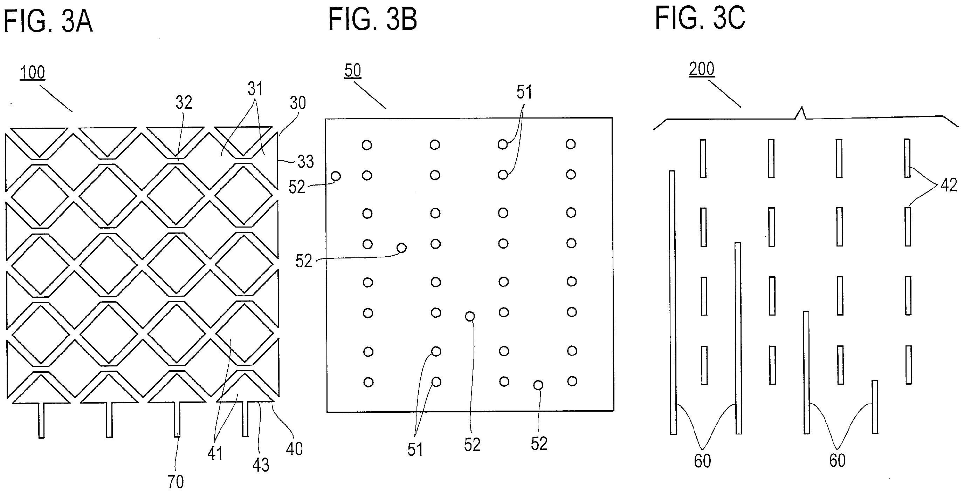

Figs. 3A to 3C show the shapes (patterns) of the sensor layer 100, the insulation layer 50, and the jumper layer 200, which are laid one after another on the base material 20.

The insulation layer 50 covers entire surface of the base material 20, except for the side 21 of the base material 20, and has the holes 51 for the second connection electrodes 42 and the holes 52 for the first signal wires 60. By removing the insulation layer 50 on the side 21 of the base material 20, the tips of the second signal wires 70 are not covered by the insulation layer 50 and are exposed.

In the configuration described above, the base material 20, the sensor layer 100, the insulation layer 50, and the jumper layer 200 are all formed of transparent materials. Glass or a film can be used as the base material 20. The sensor layer 100 and the jumper layer 200 where the first and second sensor patterns 30, 40, the first and second signal wires 60, 70 are formed can be formed by printing a conductive polymer such as polyethylene dioxythiophene (PEDOT) or by sputtering indium tin oxide (ITO). The insulation layer 50 is formed of acrylic, polyimide (PI), urethane, or the like.

The insulation layer 50 is formed to cover almost the entire surface of the base material 20, but this type of formation is not necessarily required, and it can be formed partially where it is required. Especially when the insulation layer 50 is formed of a resin and when the jumper layer 200 (or the jumper layer 200 and the sensor layer 100) is formed by sputtering ITO, it is preferred in terms of thermal resistance and outgassing that the insulation layer 50 be formed partially to minimize the area of the insulation layer 50.

A transparent cover forming a touch surface is disposed on the surface of the capacitive touch panel. The cover is formed of glass or a plastic.

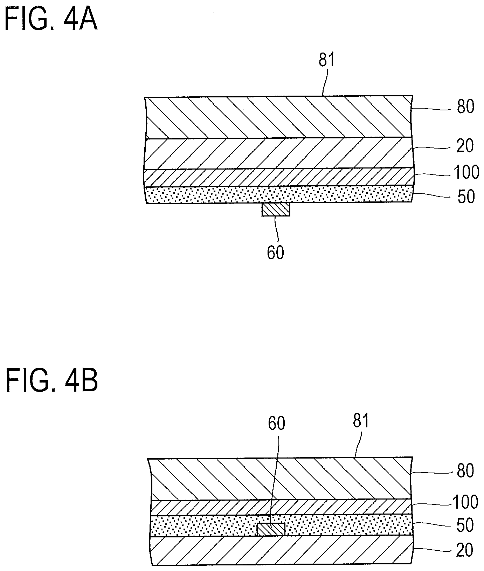

Fig. 4A schematically shows the layer structure of the capacitive touch panel, including the cover 80. The cover 80 is joined to and disposed on the face of the base material 20 opposite to the face on which the sensor layer 100 is formed. A transparent double-sided adhesive tape or an adhesive is used to join them. Fig. 4A shows the first signal wire 60 formed in the jumper layer 200, as the jumper layer 200 on the insulation layer 50, and the first signal wire 60 is placed under the insulation layer 50 in this figure.

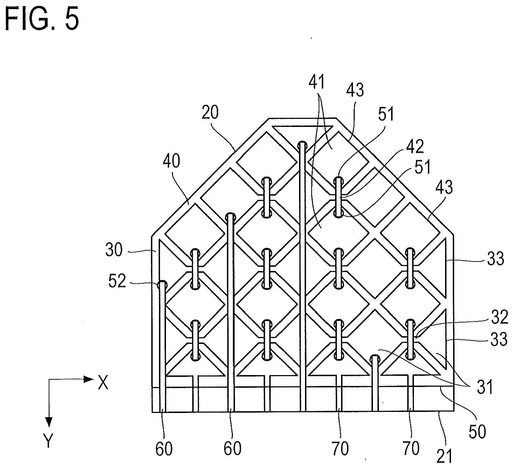

The configuration of the capacitive touch panel according to the first embodiment of the present invention has been described above. In this embodiment, the first signal wires 60 are wired to have an overlap with the first sensor electrodes 31 and are drawn out in the Y direction, which is the same direction in which the second signal wires 70 are drawn out. Accordingly, an area needed besides the sensor area in which the first sensor pattern 30 and the second sensor pattern 40 are placed to form a matrix is just the area along the side 21 of the base material 20 where the first signal wires 60 and the second signal wires 70 are drawn out. The area (wire area) other than the sensor area can be reduced by a larger amount than ever before. Therefore, in this embodiment, since the wire area can be reduced, the frame of the capacitive touch panel can be narrowed, and the device size can be reduced correspondingly. The wire area should be provided at the side 21 of the base material 20; in other words, the wire area needs to be provided just at one side of the base material 20, and consequently, it can be easily applied not only to the conventional capacitive touch panel having a quadrilateral shape but also to capacitive touch panels having an irregular outer shape as shown in Fig. 5.

In the embodiment described above, the first connection electrodes 32 are formed in the sensor layer 100 and the second connection electrodes 42 are formed in the jumper layer 200. Conversely, the second connection electrodes 42 can be formed integrally with the second sensor electrodes 41 in the sensor layer 100, and the first connection electrodes 32 can be formed in the jumper layer 200.

The sensor layer 100, the insulation layer 50, and the jumper layer 200 are laid on the base material 20 one after another in the embodiment described above, but the configuration shown in Fig. 4B can also be adopted: The jumper layer 200 (a first signal wire 60 formed in the jumper layer 200 is shown as the jumper layer 200 in Fig. 4B, as in Fig. 4A) is formed first on the base material 20; then the insulation layer 50 and the sensor layer 100 are laid on them one after another. In that case, the cover 80 is placed on and joined with the sensor layer 100.

If the layer configuration shown in Fig. 4A or Fig. 4B is adopted, the cover 80, that is, a touch surface 81 to be touched for operation, is placed, with respect to the first sensor electrodes 31, on the side opposite to the side on which the first signal wires 60 are placed, and the first sensor electrodes 31 function as a shield against the first signal wires 60 when viewed from the touch surface 81. This shielding effect of the first sensor electrodes 31 can prevent a malfunction from occurring caused by a change in capacitance between the first signal wires 60 and the touch surface 81.

### Second Embodiment

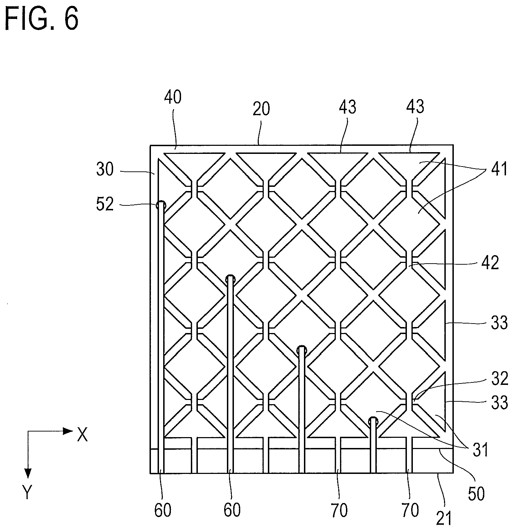

Fig. 6 shows, in outline, the configuration of a capacitive touch panel according to a second embodiment of the present invention, and components corresponding to those in the first embodiment are indicated by identical reference characters.

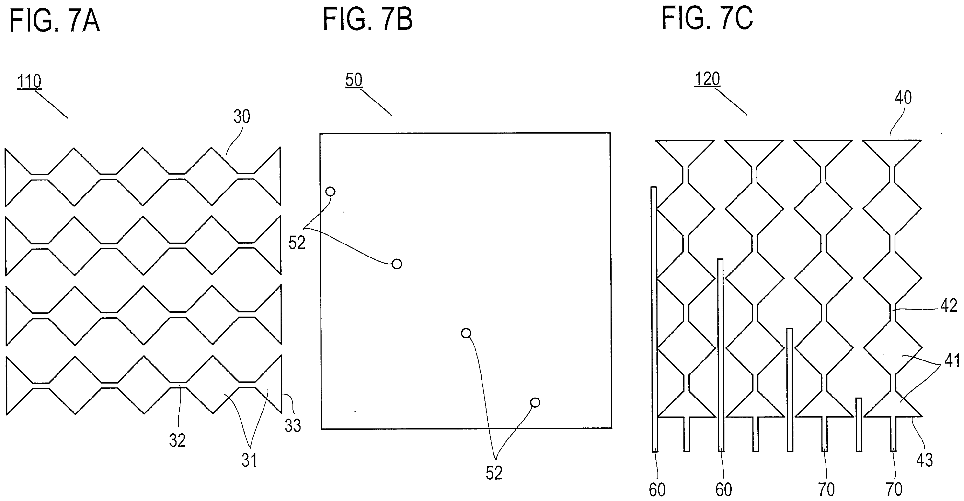

In this embodiment, a first sensor pattern 30 and a second sensor pattern 40 are formed in different layers. Figs. 7A to 7C show the shapes of a lower sensor layer 110 where the first sensor pattern 30 is formed, an insulation layer 50, and an upper sensor layer 120 where the second sensor pattern 40 is formed. In the upper sensor layer 120, first signal wires 60 and second signal wires 70 are formed in addition to the second sensor pattern 40.

The shapes of the first sensor pattern 30 and the second sensor pattern 40 are the same as those in the first embodiment, but the patterns are formed in different layers in this embodiment, so the holes 51 in the insulation layer 50 that are needed in the first embodiment in order to connect and conduct the second connection electrodes 42 to the second sensor electrodes 41 become unnecessary.

The first signal wires 60 and the second signal wires 70 are drawn out in the same manner as in the first embodiment. Holes 52 are provided in the insulation layer 50 in order to connect and conduct the first signal wires 60 and the first sensor electrodes 31. The position and configuration of a cover 80 are not shown especially, but the cover 80 is joined to and disposed on a base material 20, as in the layer configuration shown in Fig. 4A for the first embodiment described earlier.

The configuration of the second embodiment can be adopted instead of the configuration of the first embodiment, and the configuration of the second embodiment can produce the same advantageous effect as the first embodiment.

### Third Embodiment

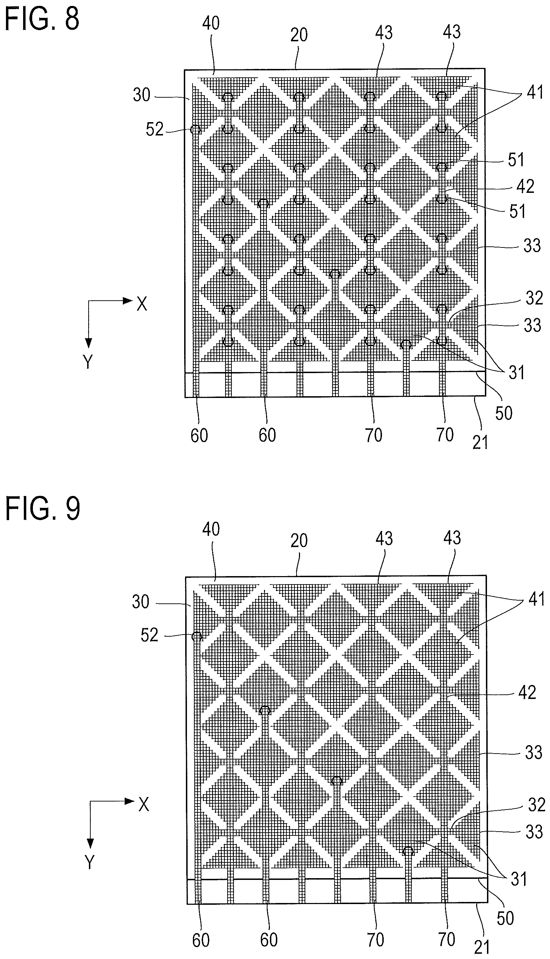

Fig. 8 shows, in outline, the configuration of a capacitive touch panel according to a third embodiment of the present invention.

In the first and second embodiments, the first and second sensor patterns 30, 40, the first and second signal wires 60, 70 are formed of transparent electrode films made of PEDOT, ITO or the like, but this embodiment differs from the first embodiment in that first and second sensor patterns 30, 40, first and second signal wires 60, 70 are formed by mesh patterns.

As a material forming the mesh patterns, silver, copper, carbon, or the like can be used, and the mesh patterns can be formed by printing or sputtering. Although the mesh patterns are opaque, sufficient transparency can be ensured by forming the mesh structure with fine-line patterns.

### Fourth Embodiment

Fig. 9 shows, in outline, the configuration of a capacitive touch panel according to a fourth embodiment of the present invention. This embodiment differs from the second embodiment in that first and second sensor patterns 30, 40, first and second signal wires 60, 70 are formed by mesh patterns, as in the third embodiment.

In the embodiments described above, the first and second signal wires 60, 70 can be formed by fine-line patterns placed in parallel, for example, instead of the transparent electrode films or the mesh patterns. As a material forming the fine-line patterns, silver, copper, carbon, or the like can be used, as in the mesh patterns. It is also possible that separately provided metal wires made of silver or copper are used, for example, as the first signal wires 60.

Since the first signal wires 60 are wired to have an overlap with the first sensor electrodes 31, stray capacitance occurring due to the electrical potential difference between them could lower the sensitivity, but if the first signal wires 60 and the first sensor electrodes 31 are formed by mesh patterns, for example, the stray capacitance would decrease, and consequently the sensitivity degradation could be reduced.

Generally, a drive system for synchronizing drive signals for the first electrode lines 33 (X electrode lines) with one another and passing drive signals for the second electrode lines 43 (Y electrode lines) progressively is adopted. With this type of drive system, no electrical potential difference occurs between the first signal wires 60 and the first sensor electrodes 31, and consequently no stray capacitance occurs; on the other hand, stray capacitance occurs between the signal wires and the second sensor electrodes 41, but the stray capacitance is small because the first signal wires 60 are not close to the second sensor electrodes 41. Therefore, the drive system described above will hardly lower the sensitivity even if the first signal wires 60 are wired to have an overlap with the first sensor electrodes 31.

## Claims

1. A capacitive touch panel comprising:
a first sensor pattern comprising first electrode lines arranged in parallel, each first electrode line comprising first sensor electrodes arranged in a first direction and first connection electrodes that connect adjacent first sensor electrodes;
a second sensor pattern comprising second electrode lines arranged in parallel, each second electrode line comprising second sensor electrodes arranged in a second direction that crosses the first direction and second connection electrodes that connect adjacent second sensor electrodes, the second sensor pattern being insulated from the first sensor pattern and forming a matrix together with the first sensor pattern;
first signal wires drawn out in the second direction from the first electrode lines, the first signal wires being wired to have an overlap with the first sensor electrodes with an insulation layer placed therebetween, except for connection parts to the first sensor electrodes; and
second signal wires drawn out in the second direction from the second electrode lines.

2. The capacitive touch panel according to Claim 1, wherein the first sensor electrodes and the second sensor electrodes are formed in a layer; and
the first signal wires are formed in a layer differing from the layer of the first and second sensor electrodes.

3. The capacitive touch panel according to Claim 2, wherein either the first connection electrodes or the second connection electrodes is formed in the layer of the first and second sensor electrodes, and other connection electrodes are formed in the layer of the first signal wires.

4. The capacitive touch panel according to Claim 1, wherein the first sensor pattern is formed in a layer different from a layer of the second sensor pattern; and
the first signal wires are formed in the layer of the second sensor pattern.

5. The capacitive touch panel according to one of Claims 1 to 4, wherein the first and second sensor patterns are formed by mesh patterns.

6. The capacitive touch panel according to one of Claims 1 to 5, wherein the first signal wires are formed by mesh patterns.

7. The capacitive touch panel according to one of Claims 1 to 5, wherein the first signal wires are formed by fine-line patterns.

8. The capacitive touch panel according to one of Claims 1 to 4, wherein the first and second sensor patterns and the first signal wires are formed of a transparent material.

9. The capacitive touch panel according to one of Claims 1 to 8, wherein a touch surface to be touched for operation is placed, with respect to the first sensor electrodes, on a side opposite to a side where the first signal wires are placed.

10. The capacitive touch panel according to one of Claims 1 to 9, wherein the outer shape is not quadrilateral.
